(19) **Europäisches Patentamt / European Patent Office / Office européen des brevets**

(11) **EP 4 307 225 B1**

(12) **EUROPEAN PATENT SPECIFICATION**

(45) Date of publication and mention
of the grant of the patent:
**04.06.2025 Bulletin 2025/23**

(21) Application number: **22859572.4**

(22) Date of filing: **14.06.2022**

(51) International Patent Classification (IPC):
**G06T 7/11** *(2017.01)*     **G06T 7/00** *(2017.01)*
**G06T 7/136** *(2017.01)*     **G06T 7/174** *(2017.01)*
**G06T 7/187** *(2017.01)*     **G06T 7/194** *(2017.01)*
**G06T 7/62** *(2017.01)*

(52) Cooperative Patent Classification (CPC):
**G06T 7/0004; G06T 7/11; G06T 7/136; G06T 7/174; G06T 7/187; G06T 7/194; G06T 7/62;**
G06T 2207/30128

(86) International application number:
**PCT/CN2022/098572**

(87) International publication number:
**WO 2023/226103 (30.11.2023 Gazette 2023/48)**

(54) **LEAF STRUCTURE MEASUREMENT METHOD DURING THRESHING, REDRYING AND AIR SEPARATION PROCESS AND LEAF OUTLET AMOUNT MEASUREMENT METHOD OF AIR SEPARATOR**

BLATTSTRUKTURMESSVERFAHREN WÄHREND DES DRESCH-, NEUTROCKNUNGS- UND LUFTTRENNUNGSVERFAHRENS UND BLATTAUSLASSMENGENMESSVERFAHREN FÜR EINEN LUFTABSCHEIDER

PROCÉDÉ DE MESURE DE STRUCTURE DE FEUILLE PENDANT UN PROCESSUS DE BATTAGE, DE RESÉCHAGE ET DE SÉPARATION D'AIR ET PROCÉDÉ DE MESURE DE QUANTITÉ DE SORTIE DE FEUILLE D'UN SÉPARATEUR D'AIR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.05.2022 CN 202210560853**
**23.05.2022 CN 202210561024**

(43) Date of publication of application:
**17.01.2024 Bulletin 2024/03**

(73) Proprietor: **CHINA TOBACCO YUNNAN INDUSTRIAL CO., LTD**
**Wuhua District**
**Kunming**
**Yunnan 650231 (CN)**

(72) Inventors:
• **WU, Kai**
**Kunming, Yunnan 650231 (CN)**

• **XIONG, Wen**
**Kunming, Yunnan 650231 (CN)**
• **CAI, Bingbiao**
**Kunming, Yunnan 650231 (CN)**
• **ZHU, Baokun**
**Kunming, Yunnan 650231 (CN)**
• **YUE, Heng**
**Kunming, Yunnan 650231 (CN)**
• **CAI, Haocheng**
**Kunming, Yunnan 650231 (CN)**
• **LU, Sheming**
**Kunming, Yunnan 650231 (CN)**
• **LU, Ting**
**Kunming, Yunnan 650231 (CN)**
• **XU, Jian**
**Kunming, Yunnan 650231 (CN)**
• **NI, Chaomin**
**Kunming, Yunnan 650231 (CN)**
• **QIN, Wenping**
**Kunming, Yunnan 650231 (CN)**

EP 4 307 225 B1

- **SU, Yi**
  **Kunming, Yunnan 650231 (CN)**
- **ZHAO, Hui**
  **Kunming, Yunnan 650231 (CN)**
- **ZHOU, Haidong**
  **Kunming, Yunnan 650231 (CN)**
- **JIA, Wei**
  **Kunming, Yunnan 650231 (CN)**
- **WANG, Hai**
  **Kunming, Yunnan 650231 (CN)**
- **YU, Chunxia**
  **Kunming, Yunnan 650231 (CN)**
- **WANG, Mingjing**
  **Kunming, Yunnan 650231 (CN)**
- **QIAO, Danna**
  **Kunming, Yunnan 650231 (CN)**
- **WU, Yiqin**
  **Kunming, Yunnan 650231 (CN)**
- **NI, Xudong**
  **Kunming, Yunnan 650231 (CN)**
- **LI, Shaoyang**
  **Kunming, Yunnan 650231 (CN)**
- **PENG, Yanhua**
  **Kunming, Yunnan 650231 (CN)**
- **YANG, Yuting**
  **Kunming, Yunnan 650231 (CN)**
- **WANG, Peng**
  **Kunming, Yunnan 650231 (CN)**
- **YI, Aoer**
  **Kunming, Yunnan 650231 (CN)**

(74) Representative: **Gille Hrabal**
**Partnerschaftsgesellschaft mbB**
**Patentanwälte**
**Brucknerstraße 20**
**40593 Düsseldorf (DE)**

(56) References cited:
**WO-A1-2022/049549      CN-A- 1 847 830**
**CN-A- 104 914 105      CN-A- 106 446 968**
**CN-A- 109 829 943      CN-A- 110 930 381**
**CN-A- 112 700 488      CN-A- 112 704 259**
**CN-A- 114 304 698**

- **CHENGUANG ZHANG, TANG XIANGYANG;CHI
  YILIN: "Machine Vision Test System on Stripped
  Tobacco Structure", MECHATRONICS, vol. 14,
  no. 11, 20 November 2008 (2008-11-20), pages 82
  - 84, 92, XP093112500**

## Description

### TECHNICAL FIELD

The present invention relates to a measurement method for a leaf output quantity of an air separator based on a leaf structure.

### BACKGROUND

In the flue-cured tobacco threshing and redrying process, a leaf type structure ("leaf structure" for short, which is also commonly referred to in the tobacco industry as "leaf type segmentation and calculation", wherein these two terms are synonymous and used interchangeably) is an important production quality evaluation index. A leaf threshing and air separation assembly is basically a black box, and at present, the leaf type structure needs to be sampled after leaves are threshed by the leaf threshing and air separation assembly. Offline detection is performed by a sieving method, which has the problems of severe lag in the detection result, poor real-time performance, incapability of timely adjustment of process parameters according to the detection results, and incapability of effective control and improvement on the leaf type structure.

Machine vision has grown deeper into various scenarios of industrial production as artificial intelligence technology has applied in the industrial field. However, there is currently no research on visual imaging of air separators by leaf threshing and redrying enterprises at domestic and abroad.

In addition, in the air separation process for tobacco processing, the leaf output quantity of the air separator is also an important index for determining the level of the air separation process. The operating state and operating quality of each thresher at each air separation level can be acquired by analysis, which provides a strong basis for adjusting the parameters of a device. The air separator utilizes the principle of air flotation to separate the stems and leaf mixtures output from the thresher into pure leaves and stems. In production practice, the leaf output quantity (i.e., the amount of tobacco leaves produced per unit of time) is an important production index that most directly represents the production efficiency in the air separation stage. The skilled person generally considers that the leaf output quantity Y of the air separator = leaf input quantity A * leaf percentage B (leaf percentage is the proportion of the mass of the leaves to the total mass of the leaves and the stems) * air separation efficiency C, wherein the leaf percentage is determined by measuring the leaf weight and stem weight respectively after sieving input leaves. The air separation efficiency C is calibrated depending on the parameters and operating parameters of the air separator itself. The air separation efficiency C is 100% in the case of complete separation of the leaves and the stems, and is a value between 0% and 100% in the case of incomplete separation of the leaves and the stems. Material fluctuations may result in frequent changes in the leaf percentage, and thus each batch of materials needs to be measured. Whereas, the air separation efficiency is determined by various factors such as structural parameters of the air separator itself and process condition parameters. For a specific air separator, the value of the air separation efficiency C is obtained after calibration according to the actual process parameters, needs to be periodically recalibrated to accommodate changes in actual process parameters of the air separator, which produces many troubles to the monitoring of the production of the air separator, because such calibration procedures are cumbersome and require extensive experiments on production lines. Therefore, the skilled person has been hoping that there is a more direct and convenient method for determining the leaf output quantity of the air separator. It is also referred to the documents CN1847830A, CN110930381A, and CN112704259A.

The present invention aims at solving the above problems.

### SUMMARY

The problem is solved by a method according to claim 1. Preferred embodiments are described in the dependent claims.

In a first aspect of the disclosure, which does not form part of the present invention but represent information useful for understanding the invention, a machine vision-based measurement method for a leaf structure in a leaf threshing-redrying-air separation process is provided including:

    step 1: acquiring, by a machine vision imaging system, a background image without leaves and a real-time image with leaves in an air separation state in an air separator;
    step 2: performing same denoising processing and image enhancement processing on the background image and the real-time image respectively, and performing difference operation on the processed images to obtain a difference image;
    step 3: graying the difference image, and then applying a threshold method for global fixed leaf gray threshold segmentation to obtain a leaf binary image;

step 4: calculating pixel areas of super-large leaves, large leaves, medium leaves, small leaves and fragmentary leaves by using a connected component analysis method according to a preset pixel area division standard for the super-large leaves, large leaves, medium leaves, small leaves and fragmentary leaves; and

step 5: extracting leaf duty cycle data and leaf structure distribution data by calculating the pixel areas.

Preferably, the machine vision imaging system in the step 1 includes an air separator, a camera and a camera holder, wherein the camera is mounted on the camera holder and used to photograph the inside of the air separator to acquire an image.

Preferably, the threshold method for global fixed leaf gray threshold segmentation includes: setting a gray interval [Tmin, Tmax] for extraction of the image, and setting a threshold T within the interval, wherein Tmin<T<Tmax; setting pixels with gray values greater than T to be white, and setting pixels with gray values less than or equal to T to be black; or vice versa, setting pixels with gray values greater than T to be black, and setting pixels less than or equal to T to be white.

Preferably, the pixel area division standard is: a pixel area range of the super-large leaves: 25000-500000, a pixel area range of the large leaves: 1500-25000, a pixel area range of the medium leaves: 600-1500, a pixel area range of the small leaves: 100-600, and a pixel area range of the fragmentary leaves: 50-100.

Preferably, the leaf duty cycle data is obtained by calculating a ratio of the leaf area on the image to the total area of the single image.

Preferably, the leaf structure distribution data is obtained by calculating the percentage of the pixel area of a certain type of leaves to the sum of the pixel areas of all types of leaves.

In a second aspect, which is according to the present invention, a method for measuring a leaf output quantity of an air separator based on a leaf structure is provided, including:

step 1: acquiring, by a machine vision imaging system, a real-time image with leaves in an air separation state in an air separator;

step 2: processing the real-time image;

step 3: obtaining area percentages of large leaves, medium leaves, small leaves and fragmentary leaves on the processed image according to a preset pixel area division standard for the large leaves, medium leaves, small leaves and fragmentary leaves;

step 4: measuring a leaf output quantity of the air separator according to the following preset function formula:

leaf output quantity=$1776.44-5.77*X_1-185.71*X_4-0.65*X_2*X_2-0.30*X_3*X_3+56.44*X_4*X_4$, wherein $X_1$ is an area percentage% of the large leaves, $X_2$ is an area percentage% of the medium leaves, $X_3$ is an area percentage% of the small leaves, and $X_4$ is an area percentage% of the fragmentary leaves.

Preferably, the machine vision imaging system in the step 1 includes an air separator, an industrial camera, two LED lamps, and an electric control cabinet. The industrial camera is located directly in front of an upper air separation bin of the air separator. The LED lamps are located on two sides of the industrial camera. The electric control cabinet is connected to the industrial camera and the LED lamps by data lines. The electric control cabinet includes an industrial computer and a display. The industrial computer is connected to the display by a data line.

Preferably, the step 2 of processing the image includes graying, binarization and denoising.

Preferably, the binarization includes: setting a gray interval [Tmin, Tmax] for extraction of the image, and setting a threshold T within the interval, wherein Tmin<T<Tmax; setting pixels with gray values greater than T to be white, and setting pixels with gray values less than or equal to T to be black; or vice versa, setting pixels with gray values greater than T to be black, and setting pixels less than or equal to T to be white.

Preferably, the pixel area division standard in step 3 is: a pixel area range of the large leaves: 1500-25000, a pixel area range of the medium leaves: 600-1500, a pixel area range of the small leaves: 100-600, and a pixel area range of the fragmentary leaves: 50-100.

Preferably, the step 3 of dividing the areas of the large leaves, the medium leaves, the small leaves and the fragmentary leaves obtained by a connected component analysis method by the cross-section area inside an air separation chamber of the air separator, respectively, to obtain the area percentages of the large leaves, the medium leaves, the small leaves and the fragmentary leaves.

Preferably, the leaf structure measured in the first aspect of the present invention is used in the method for measuring the leaf output quantity of the air separator based on the leaf structure in the second aspect of the present invention.

Beneficial effects:

1. The machine vision-based segmentation and calculation method for leaf types in the leaf threshing-redrying-air separation process is provided, and can obtain and analyze video images in the air separation state in the air separator and analyzed so that the corresponding duty cycle data and leaf structure data can be quickly extracted, thereby providing support for feedback control and real-time evaluation of the quality of the leaf threshing process, and the detection method.

2. The present invention finds the method for measuring the leaf output quantity of the air separator through self-created function by machine vision and algorithms to measure the leaf structure, i.e., the percentages of the large leaves, medium leaves, small leaves and fragmentary leaves, which is not only simple and practical, but also has instantaneity. Furthermore, the method breaks through the traditional recognition, associates this relative percentage of the leaf structure to the leaf output quantity by the function, and has quantitative precision. It can be seen from the function formula of the present invention that there is no leaf input quantity A at all, instead, only the leaf area percentage is used as an independent variable, so that it is possible to measure the leaf output quantity directly by the leaf area percentage, and to measure the leaf output quantity of the air separator by the leaf structure, which provides a new perspective for production regulations. In addition, it is also possible to eliminate the trouble of measuring the leaf percentage for each batch of materials by a sieving and weighing method.

## BRIEF DESCRIPTION OF THE DRAWINGS

FIG. 1 is a background image without leaves.
FIG. 2 is a real-time leaf image with leaves.
FIG. 3 is a difference image of a background image and a real-time leaf image.
FIG. 4 is a leaf binary image based on a global fixed gray threshold.
FIG. 5 is a pixel image of an ultra-large leaf.
FIG. 6 is a pixel image of a large leaf.
FIG. 7 is a pixel image of a medium leaf.
FIG. 8 is a pixel image of a small leaf.
FIG. 9 is a pixel image of a fragmentary leaf.
FIG. 10 is a schematic diagram of a machine vision imaging system.

1-air separator, 2-LED lamp, 3-industrial camera, 4-electric control cabinet.

## DETAILED DESCRIPTION

In order to make the objectives, technical solutions and beneficial effects of the present invention clearer, the preferred embodiment of the present invention will be described in detail below to facilitate the understanding by the skilled person.

Example 1, which does not form part of the present invention but represent information useful for understanding the invention:

This example relates to a machine vision-based measurement method for a leaf structure in a leaf threshing-redrying-air separation process, which includes the following steps.

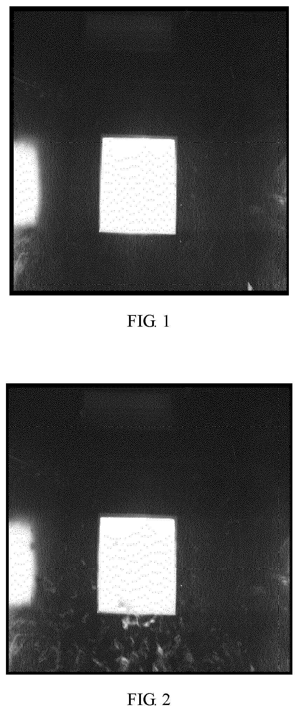

Step 1: A machine vision imaging system is used to acquire a background image without leaves and a real-time image with leaves in an air separation state in an air separator. The machine vision imaging system includes an air separator, a camera and a camera holder, wherein the camera is mounted on the camera holder and used to photograph the inside of the air separator to acquire the images. FIG. 1 is a background image without leaves. FIG. 2 is a real-time leaf image with leaves. The time interval during which the camera acquires the images is 50 ms.

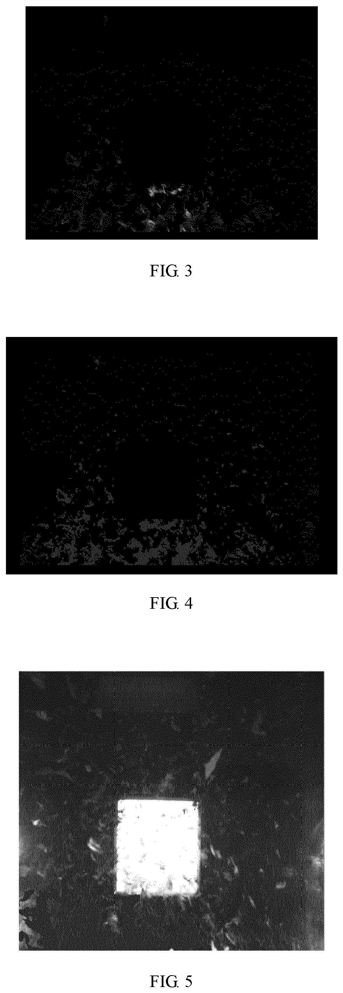

Step 2: The background image and the real-time image are subjected to the same denoising processing and image enhancement processing respectively, and the processed images are subjected to difference operation to obtain a difference image. The denoising processing is implemented by a Gaussian filtering algorithm, and the image enhancement processing is implemented by an image enhancement algorithm. The image feature information is enhanced by the two processing steps. The processed background image and real-time image are then subjected to difference operation to obtain a difference image, as shown in FIG 3.

Step 3: The difference image is subjected to graying, and then the leaf image is segmented using a threshold method for global fixed leaf gray threshold segmentation to obtain a leaf binary image. The threshold method for global fixed leaf gray threshold segmentation includes: setting a gray interval [Tmin, Tmax] for extraction of the image, and setting a threshold T within the interval, wherein Tmin<T<Tmax; setting pixels with gray values greater than T to be white, and setting pixels with gray values less than or equal to T to be black; or vice versa, setting pixels with gray values greater than T to be black, and setting pixels less than or equal to T to be white. The leaf binary image obtained in this step is as shown in FIG 4.

Step 4: Pixel areas of super-large leaves, large leaves, medium leaves, small leaves and fragmentary leaves are calculated by using a connected component analysis method according to a preset pixel area division standard for the super-large leaves, large leaves, medium leaves, small leaves and fragmentary leaves. A pixel area range of the super-large leaves is 25000-500000, a pixel area range of the large leaves is 1500-25000, a pixel area range of the medium leaves is 600-1500, a pixel area range of the small leaves is 100-600, and a pixel area range of the fragmentary leaves is 50-100. FIGS. 5-9 illustrate pixel images for super-large leaves, large leaves, medium leaves, small leaves, and fragmentary leaves respectively.

Step 5: Leaf duty cycle data and leaf structure distribution data are extracted by calculating the pixel areas. The leaf duty cycle data is obtained by calculating a ratio of the leaf area on the image to the total area of the single image. The leaf structure distribution data is obtained by calculating the percentage of the pixel area of a certain type of leaves to the sum of the pixel areas of all types of leaves.

After processing of the steps 1-5, the platform of the machine vision imaging system is able to obtain and analyze video images in the air separation state in the air separator, so that the corresponding duty cycle data and the leaf structure data can be quickly extracted, thereby providing support for feedback control and real-time evaluation of the quality of the leaf threshing process, and the detection method.

Embodiment 1

The embodiment relates to a method for measuring a leaf output quantity of an air separator based on a leaf structure, which includes the following steps.

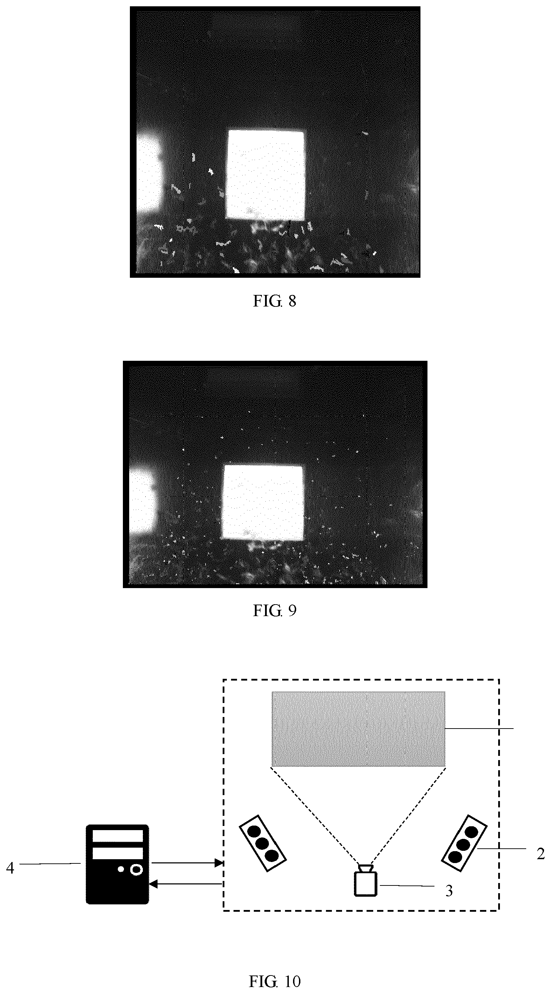

Step 1: A machine vision imaging system is used to acquire a real-time image with leaves in an air separation state in an air separator. Specifically, the machine vision imaging system sets up a vision imaging platform outside a glass window of an upper air separation bin of the air separator, and includes an industrial camera for imaging tobacco leaves moving at high speed inside the upper air separation bin in real time, and two LED lamps for illuminating the inside of the upper air separation bin. The industrial camera for image acquisition is located directly in front of the transparent organic glass of the upper air separation bin of the air separator. The camera placement distance needs to be determined according to the field of view range of the camera, to guarantee that the image covers the whole upper air separation bin. In order to take into account the instantaneity of image transmission and image processing, the camera resolution is chosen to be 1280x1024, and the time interval of photographing is 50 ms. In FIG 10, 2 represents LED lamps, which are located on the left right and right side of the camera respectively. An electric control cabinet is located beside the air separator, and includes an industrial computer for data transmission and image processing, and a liquid crystal display for image display. The electric control cabinet is connected to the camera and the LED lamps respectively.

Step 2: The real-time image is processed. The method is as follows.

1: A color image is subjected to graying.

Since the color of the tobacco leaf is closer to yellow, an R channel in RGB channels is most sensitive, and the R channel in the tobacco leaf image is extracted for subsequent analysis.

2: The image subjected to graying is binarized.

A gray interval [Tmin, Tmax] for extraction of the image is set, and a threshold T is set within the interval, wherein Tmin<T<Tmax. Pixels with gray values greater than T are set to be white, and pixels with gray values less than or equal to T are set to be black. Or conversely, pixels with gray values greater than T are set to be black, and pixels less than or equal to T are set to be white.

3: Denoising processing is performed finally.

Due to long-term operation of the air separation bin, dust may be left on the surrounding bin and the transparent glass. Therefore, denoising is required to be performed on the acquired image to remove some fine particles, such as dust. The method employed by the present invention is that the image is denoised with opening operation:

$$g'(x,y) = g(x,y) \circ S(x,y) = \left(g(x,y) \Theta S(x,y)\right) \oplus S(x,y),$$

wherein $S(x,y)$ represents a structure element used in the opening operation. The structure element used by the present invention is a circular structure having a size of 3×3. After the denoising is completed, the final processed result is obtained, as shown in FIG 4.

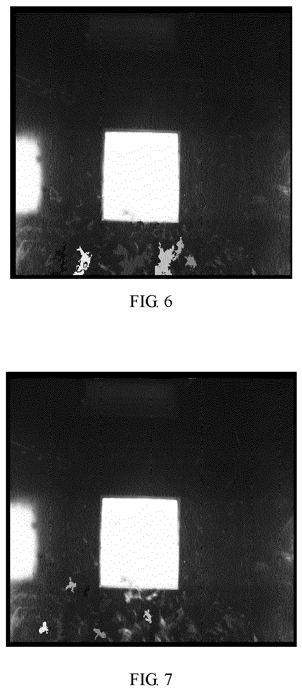

Step 3: Area percentages of large leaves, medium leaves, small leaves and fragmentary leaves are obtained on the processed image according to a preset pixel area division standard for the large leaves, medium leaves, small leaves and fragmentary leaves. Areas of the large leaves, medium leaves, small leaves and fragmentary leaves are obtained using a connected component analysis method. The pixel area division standard is: a pixel area range of the large leaves: 1500-25000, a pixel area range of the medium leaves: 600-1500, a pixel area range of the small leaves: 100-600, and a pixel area range of the fragmentary leaves: 50-100. Since the cross-section area of the upper air separation bin of the air separator is known, the areas of the large leaves, the medium leaves, the small leaves and the fragmentary leaves are divided by the cross-section area, to obtain the area percentages of the large leaves, medium leaves, small leaves and fragmentary leaves. FIGS. 6-9 show pixel images for the large leaves, medium leaves, small leaves, and fragmentary leaves respectively.

Step 4: The leaf output quantity of the air separator is measured according to a preset function formula.

The function formula is: leaf output quantity=$1776.44-5.77*X_1-185.71*X_4-0.65*X_2*X_2-0.30*X_3*X_3+56.44*X_4*X_4$, wherein $X_1$ is an area percentage% of the large leaves, $X_2$ is an area percentage% of the medium leaves, $X_3$ is an area percentage% of the small leaves, and $X_4$ is an area percentage% of the fragmentary leaves.

Practical examination of the function shows that a maximum relative error% of a training sample equals to 7.46%, a minimum relative error% of the training sample equals to 5.73%, and an average relative error% of the training sample equals to 1.98%. The model built by the multifactorial and quadratic component stepwise regression method is stable, and the average relative error of the model fluctuates within 5.2%.

It is finally should be noted that, the above preferred embodiment is only used to illustrate the technical solutions of the present invention, rather than constructing a limitation. Although the present invention has been described in detail with reference to the preferred embodiment those skilled in the art should understand that various changes in form and details may be made without departing from the scope as defined by the appended claims of the present invention

## Claims

1. A method for measuring a leaf output quantity of an air separator based on a leaf structure, comprising:

   step 1: acquiring, by a machine vision imaging system, a real-time image with leaves in an air separation state in an air separator; and
   step 2: processing the real-time image;
   **characterized by**
   step 3: obtaining area percentages of large leaves, medium leaves, small leaves and fragmentary leaves on the processed image according to a preset pixel area division standard for the large leaves, medium leaves, small leaves and fragmentary leaves; and
   step 4: measuring the leaf output quantity of the air separator according to the following preset function formula:

$$\text{leaf output quantity}=$$

$$1776.44-5.77*X_1-185.71*X_4-0.65*X_2*X_2-0.30*X_3*X_3+56.44*X_4*X_4,$$

   , wherein $X_1$ is an area percentage% of the large leaves, $X_2$ is an area percentage% of the medium leaves, $X_3$ is an area percentage% of the small leaves, and $X_4$ is an area percentage% of the fragmentary leaves.

2. The method for measuring the leaf output quantity of the air separator based on the leaf structure according to claim 1, **characterized in that**, the step 2 of processing the image comprises graying, binarization and denoising, wherein the binarization comprises: setting a gray interval [Tmin, Tmax] for extraction of the image, and setting a threshold T within the interval, wherein Tmin<T<Tmax; setting pixels with gray values greater than T to be white, and setting pixels with gray values less than or equal to T to be black; or vice versa, setting pixels with gray values greater than T to be black, and setting pixels less than or equal to T to be white.

3. The method for measuring the leaf output quantity of the air separator based on the leaf structure according to claim 1, **characterized in that** the step 3 of dividing the areas of the large leaves, the medium leaves, the small leaves and the fragmentary leaves obtained by a connected component analysis method by the cross-section area inside an air separation chamber of the air separator, respectively, to obtain the area percentages of the large leaves, the medium leaves, the small leaves and the fragmentary leaves.

**Patentansprüche**

1.  Ein Verfahren zum Messen einer Blattausstoßmenge eines Luftabscheiders auf der Grundlage einer Blattstruktur, umfassend:

    Schritt 1: Erfassen, durch ein Abbildungssystem des maschinellen Sehens, eines Echtzeitbildes mit Blättern in einem Luftabscheidezustand in einem Luftabscheider; und
    Schritt 2: Verarbeiten des Echtzeitbildes;
    **gekennzeichnet durch**
    Schritt 3: Erhalten von prozentualen Flächenanteilen von großen Blättern, mittleren Blättern, kleinen Blättern und fragmentarischen Blättern auf dem verarbeiteten Bild gemäß einem voreingestellten Pixelflächeneinteilungsstandard für die großen Blätter, mittleren Blätter, kleinen Blätter und fragmentarischen Blätter; und
    Schritt 4: Messen der Blattausstoßmenge des Luftabscheiders gemäß der folgenden voreingestellten Funktionsformel:

    $$\text{Blattausstoßmenge} =$$

    $$1776{,}44 - 5{,}77 * X_1 - 185{,}71 * X_4 - 0{,}65 * X_2 * X_2 - 0{,}30 * X_3 * X_3 + 56{,}44 * X_4 * X_4,$$

    ein prozentualer Flächenanteil der großen Blätter ist, $X_2$ ein prozentualer Flächenanteil der mittleren Blätter ist, $X_3$ ein prozentualer Flächenanteil der kleinen Blätter ist und $X_4$ ein prozentualer Flächenanteil der fragmentarischen Blätter ist.

2.  Das Verfahren zur Messung der Blattausstoßmenge des Luftabscheiders auf der Grundlage der Blattstruktur gemäß Anspruch 1, **dadurch gekennzeichnet, dass** der Schritt 2 der Verarbeitung des Bildes ein Grauen, eine Binarisierung und ein Entrauschen umfasst, wobei die Binarisierung umfasst: Festlegen eines Grauintervalls [Tmin, Tmax] für die Extraktion des Bildes und Festlegen eines Schwellenwerts T innerhalb des Intervalls, wobei Tmin<T<Tmax; Festlegen von Pixeln mit Grauwerten größer als T als weiß, und Festlegen von Pixeln mit Grauwerten kleiner oder gleich T als schwarz; oder umgekehrt, Festlegen von Pixeln mit Grauwerten größer als T als schwarz, und Festlegen von Pixeln kleiner oder gleich T als weiß.

3.  Das Verfahren zum Messen der Blattausstoßmenge des Luftabscheiders auf der Grundlage der Blattstruktur gemäß Anspruch 1, **dadurch gekennzeichnet, dass** der Schritt 3 des Teilens der Flächen der großen Blätter, der mittleren Blätter, der kleinen Blätter und der fragmentarischen Blätter durch ein Verfahren zur Analyse verbundener Komponenten durch die Querschnittsfläche innerhalb einer Lufttrennkammer des Luftabscheiders erhalten werden, um die prozentualen Flächenanteile der großen Blätter, der mittleren Blätter, der kleinen Blätter und der fragmentarischen Blätter zu erhalten.

**Revendications**

1.  Méthode de mesure d'une quantité de sortie de feuilles d'un séparateur d'air basée sur une structure de feuilles, comprenant :

    étape 1 : acquérir, par un système d'imagerie de vision artificielle, une image en temps réel avec des feuilles dans un état de séparation d'air dans un séparateur d'air ; et
    étape 2 : traiter l'image en temps réel ;
    **caractérisé par**
    étape 3 : obtenir des pourcentages de zone de grandes feuilles, de feuilles moyennes, de petites feuilles et de feuilles fragmentaires sur l'image traitée selon une norme de division de zone de pixels prédéfinie pour les grandes feuilles, les feuilles moyennes, les petites feuilles et les feuilles fragmentaires ; et
    étape 4 : mesurer la quantité de sortie de feuilles du séparateur d'air selon la formule de fonction prédéfinie suivante :

quantité de sortie de feuilles =

$$1776,44 - 5,77 * X_1 - 185,71 * X_4 - 0,65 * X_2 * X_2 - 0,30 * X_3 * X_3 + 56,44 * X_4 * X_4,$$

, dans laquelle $X_1$ est un pourcentage% de zone des grandes feuilles, $X_2$ est un pourcentage% de zone des feuilles moyennes, $X_3$ est un pourcentage% de zone des petites feuilles et $X_4$ est un pourcentage% de zone des feuilles fragmentaires.

2. La méthode de mesure de la quantité de sortie de feuilles du séparateur d'air basée sur la structure des feuilles selon la revendication 1, **caractérisée en ce que** l'étape 2 de traiter l'image comprend le grisonnement, la binarisation et le débruitage, dans lequel la binarisation comprend : définir un intervalle de gris [Tmin, Tmax] pour l'extraction de l'image, et définir un seuil T dans l'intervalle, dans lequel Tmin < T < Tmax ; définir des pixels dont les valeurs de gris sont supérieures à T comme étant blancs, et définir des pixels dont les valeurs de gris sont inférieures ou égales à T comme étant noirs ; ou inversement, définir des pixels dont les valeurs de gris sont supérieures à T comme étant noirs, et définir des pixels inférieurs ou égaux à T comme étant blancs.

3. La méthode de mesure de la quantité de sortie de feuilles du séparateur d'air basée sur la structure des feuilles selon la revendication 1, **caractérisée en ce que** l'étape 3 de diviser les zones des grandes feuilles, des feuilles moyennes, des petites feuilles et des feuilles fragmentaires obtenues par une méthode d'analyse de composants connectés par la zone de section transversale à l'intérieur d'une chambre de séparation d'air du séparateur d'air, respectivement, pour obtenir les pourcentages de zone des grandes feuilles, des feuilles moyennes, des petites feuilles et des feuilles fragmentaires.

FIG. 1

FIG. 2

FIG. 3

FIG. 4

FIG. 5

FIG. 6

FIG. 7

FIG. 8

FIG. 9

FIG. 10

**EP 4 307 225 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 1847830 A
- CN 110930381 A
- CN 112704259 A